# EUROPEAN PATENT SPECIFICATION

(11) **EP 2 770 850 B1**
(45) Date of publication and mention of the grant of the patent: **09.09.2015**
(21) Application number: 12772112.4
(22) Date of filing: 11.10.2012
(51) Int. Cl.: A23L 1/24, A23L 1/30, A23D 7/00, A23D 7/005, A23D 9/007

(54) **EDIBLE PRODUCT AND USE THEREOF FOR INCREASING BIOAVAILABILITY OF MICRONUTRIENTS COMPRISED IN VEGETABLES OR FRUIT**
ESSBARES PRODUKT UND VERWENDUNG DAVON ZUR ERHÖHUNG DER BIOVERFÜGBARKEIT VON IN GEMÜSE UND OBST ENTHALTENEN MIKRONÄHRSTOFFEN
PRODUIT COMESTIBLE ET SON UTILISATION POUR ACCROÎTRE LA BIODISPONIBILITÉ DES MICRONUTRIMENTS PRÉSENTS DANS LES LÉGUMES OU LES FRUITS

(30) Priority: 25.10.2011 EP 11186530
(43) Date of publication of application: 03.09.2014
(73) Proprietor: Unilever N.V., 3013 AL Rotterdam (NL); Unilever PLC, London, Greater London EC4Y 0DY (GB)
(72) Inventor: BOUWENS, Elisabeth, Cornelia, M., NL-3133 AT Vlaardingen (NL); FLENDRIG, Leonard Marcus, NL-3133 AT Vlaardingen (NL); VAN NIELEN, Wim, NL-3133 AT Vlaardingen (NL)
(74) Representative: van Benthum, Wilhelmus A. J.
(86) International application number: PCT/EP2012/070176
(87) International publication number: WO 2013/060577

(56) References cited:
- WO-A1-99/47001
- WO-A1-2011/077073
- WO-A1-2011/120766
- DE-A1- 2 935 546
- ODEBERG ET AL: "Oral bioavailability of the antioxidant astaxanthin in humnas is enhanced by incorporation of lipid based formulations", EUROPEAN JOURNAL OF PHARMACEUTICAL SCIENCES, ELSEVIER, AMSTERDAM, NL, vol. 19, 1 January 2003 (2003-01-01), pages 299-304, XP002303542, ISSN: 0928-0987, DOI: 10.1016/S0928-0987(03)00135-0

## Description

### TECHNICAL FIELD OF THE INVENTION

The present invention provides an oil containing edible product that is capable of increasing the bioavailability of one or more oil soluble micronutrients that are comprised in vegetables or fruit. The edible product according to the present invention comprises at least 4 wt.% of a glyceride component consisting of:
- 76-97 wt.% triglycerides;
- 0-8 wt.% diglycerides;
- 3-16 wt.% monoglycerides; and
wherein the weight ratio diglycerides:monoglycerides is less than 1:2.

The present invention also relates to the use of the aforementioned edible product for increasing the bioavailability of one or more micronutrients that are comprised in a vegetable or a fruit, said use comprising consuming the edible product within 30 minutes of consuming said vegetable or fruit.

### BACKGROUND OF THE INVENTION

It is well-known that fruit and vegetables are an important source of micronutrients such as vitamins and minerals. It is less well-known, however, that following consumption of vegetables or fruit the human body is often capable of utilizing only a fraction of the micronutrients contained therein. This phenomenon is commonly referred to as the limited oral bioavailability of micronutrients that are contained in a particular vegetable or fruit. Here the term "oral bioavailability" refers to the fraction of the total amount of an ingested micronutrient that ultimately reaches the systemic circulation. Thus, an oral bioavailability of 20% means that only 20% of the ingested amount of micronutrient reaches the systemic circulation.

The oral bioavailability of a micronutrient that is contained within a vegetable or a fruit is determined by three successive processes. First the micronutrient must be released from the vegetable or fruit matrix into the juices of the gastrointestinal tract. The extent to which a micronutrient is released from a vegetable or fruit into the gastrointestinal tract determines its so called bioaccessibility. Secondly, the released nutrient must enter the intestinal epithelium where it is incorporated in chylomicrons which are transported via the lymph into the bloodstream near the heart (absorption). Finally, in order to reach the systemic circulation the micronutrient that has been transported into the portal vein must pass the liver without being metabolized. Consequently, oral bioavailability of a micronutrient is determined by its bioaccessibility, its absorption and its metabolization.

In case of vegetables and fruit limited bioavailability of micronutrients is strongly associated with limited absorption, especially in case the micronutrient is an oil-soluble micronutrient such an oil-soluble vitamin or provitamin. Hence, in order to effectively enhance the oral bioavailability of oil-soluble micronutrients in fresh vegetables and fresh fruit, the absorption of these micronutrients should be increased.

Odeberg et al. (Oral bioavailability of the antioxidant astaxanthin in humans is enhanced by incorporation of lipid based formulations, European Journal of Pharmaceutical Sciences (2003) 19, 299-304) describe the results of a study that aimed to investigate whether the bioavailability of astaxanthin could be increased in humans by incorporating it into lipid formulations of different compositions. The authors observe that since in commercially available food supplements astaxanthin is present as a triglyceride rich algal meal, the investigation focussed on the effects of the addition of different surfactants. The highest bioavalability is observed with a formulation containing 32 wt.% algal meal (0.10% fat); 20% mono/diglycerides; and 56% polysorbate 80.

Brown et al. (Carotenoid bioavailability is higher from salads ingested with full-fat than with fat-reduced salad dressing as measured with electrochemical detection, Am J Clin Nutr (2004); 80, 396-403) have reported that the results of a study that aimed to quantify the appearance of carotenoids in plasma chylomicrons after subjects ingested fresh vegetable salads with fat-free, reduced-fat and full-fat salad dressings. The authors found that after ingestion of salads with fat-free salad the appearance of carotenoids in plasma chylomicrons was negligible. After ingestion of the salads with reduced-fat salad dressing, the appearance of the carotenoids in plasma chylomicrons increased relative to that after ingestion of the salads with fat-free salad dressing. Similarly, the appearance of the carotenoids in plasma chylomicrons was higher after the ingestion of salads with full-fat than with reduced-fat salad dressing.

DE-A 1 692 590 describes a process for the preparation of sauces from aqueous solutions containing protein and at least 0.5 wt.% lipids, wherein:
(a) 0.12-3 wt.% monoglyceride and up to 2.5 wt.% of at least one emulsifier are added to the solution; and
(b) the milk product is acidified to a pH of 4.0-4.9.

Example 1 describes the preparation of a sour cream sauce that contains at least 15 wt.% of oil and 0.7 wt.% monoglycerides.

US 4,803,087 describes a composition useful for incorporation into raw milk consisting essentially of an aqueous emulsion of
(i) 10-40 wt.% edible oil,
(ii) 0.5-5 wt.% of a source of at least one vitamin selected from the group consisting of vitamin A, vitamin D and a mixture of vitamin A and vitamin D, and
(iii) 5-15 wt.% of an emulsifying agent that is a combination of (a) a member selected from the group consisting of food grade polyoxyethylene sorbitan oleates, polyoxyethylene sorbitan stearates and mixtures thereof, and (b) a member selected from the group consisting of food grade oleic acid monoesters of glycerol, sorbitol and sucrose, polyglycerol esters of edible fatty acids, and mixtures thereof, the weight ratio of (a):(b) being from about 2:5 to about 5:2.

The Example of US 4,803,087 describes an oil-and-water emulsion comprising 25 wt.% soybean oil, 4.5 wt.% polyoxyethylene sorbitan monooleate, 4.5 wt.% glycerol monooleate, 2.0 wt.% glycerin and 3.0 wt.% vitamin A.

US 2008/0311211 describes an oil-in-water emulsion comprising an oil and a lipophilic additive (LPA). Example 5 describes an emulsion that was prepared by mixing 39 wt.% of soybean oil with 1.0 wt.% LPA (Dimodan U/J, Danisco, Danmark) to prepare the lipid phase. Next, 40 wt.% of this lipidic phase was added to 60% of a wt.% Na caseinate solution. The mixture was stirred with a propeller stirrer to yield a stable oil-in-water emulsion having a D32 of 13 µm.

WO 2011/077073, describes a food composition comprising 3-45% of a glyceride component, said glyceride component comprising triglycerides, monoglycerides and sunflower oil. DE 29 35 546 describes an edible product comprising 6.2% glyceridesconsisting of 25% monoglycerides and 75% triglycerides. WO 2011/120766 discloses an edible product comprising 0.1-30% of a glzceride component and tomato derived components. The glyceride component comprises 81.4% triglycerides, at least 10% diglycerides and 1.2% monoglycerides.

### SUMMARY OF THE INVENTION

The present inventors have succeeded in finding a new effective way to increase the bioavailability of oil-soluble nutrients that are contained in vegetables and fruit. The inventors have developed an oil containing edible product comprising a special glyceride component that is capable of substantially increasing the bioavailability of oil-soluble micronutrients contained in vegetables or fruits if the edible product is consumed together with these vegetables or fruit.

The special glyceride component that represent at least 4 wt.% of the edible product and that is believed to be responsible for the bioavailability enhancing properties of the edible product is composed of:
- 76-97 wt.% triglycerides;
- 0-8 wt.% diglycerides;
- 3-16 wt.% monoglycerides;
wherein the weight ratio diglycerides:monoglycerides is less than 1:2.

Thus, one aspect of the invention relates to the use of the above defined glyceride component for increasing the bioavailability of one or more micronutrients that are comprised in a vegetable or a fruit, said use comprising consuming an edible product containing at least 4 wt.% of said glyceride component within 30 minutes of consuming said vegetable or fruit

The inventors have unexpectedly discovered that the glyceride component specified above is more effective in enhancing the bioavailability of oil-soluble micronutrients in vegetables or fruit than any one of its glyceride constituents *per se.*

Although the inventors do not wish to be bound by theory, it is believed that the favorable effect of the glyceride component on the bioavailability of oil soluble nutrients contained in vegetables or fruit is largely attributable to the impact of glyceride component on the absorption of said micronutrients. The mechanisms by which the glyceride component stimulates the absorption of oil soluble nutrients into the gastrointestinal tract are not yet fully understood. However, it is believed that the favorable impact of the glyceride component on the absorption of oil soluble nutrients contained in vegetables or fruit is largely exerted after ingestion of such vegetables or fruit by a consumer.

In order for the present edible product to produce the desired bioavailability enhancing effect, said edible product should come into contact with a vegetable or a fruit no later than the moment when the vegetable or fruit reach the part of the intestines where absorption of oil soluble micronutrients takes place. Hence, the edible product should be combined with the vegetable or the fruit prior to consumption or, alternatively it can be consumed separately from the vegetable or the fruit, but within a period of 30 minutes from the moment that the vegetable or fruit was consumed.

Another aspect of the invention relates to an edible product that comprises 4-90 wt.% of a glyceride component and 10-96 wt% of other components, said glyceride component consisting of:
- 76-97 wt.% triglycerides;
- 0-8 wt.% diglycerides;
- 3-16 wt.% monoglycerides; and
said glyceride component having a solid fat content at 10°C (N₁₀) of less than 5%; wherein the weight ratio diglycerides:monoglycerides is less than 1:2; and wherein the edible product contains at least 0.5 wt.% of monoglycerides.

Edible products containing triglycerides and monoglycerides are well-known in the art. The edible product according to the present invention differs from most of these prior art products in that the glyceride component comprises a relatively high amount of monoglycerides, especially relative to the amount of diglycerides, and in that the glyceride component has a very low solid fat content at 10°C.

The invention also provides a salad comprising at least 50 wt.% of vegetable and/or fruit components and at least 3 wt.% of the aforementioned edible product.

Yet another aspect of the invention relates to a process of manufacturing the edible product of the present invention, said process comprising combining 76-97 parts by weight of a triglyceride component having a triglyceride content of 95-100 wt.% with 3-16 parts by weight of a monoglyceride component having a monoglyceride content of at least 70-100 wt.%.

### DETAILED DESCRIPTION OF THE INVENTION

Accordingly, one aspect of the invention relates to the use of a glyceride component for increasing the bioavailability of one or more micronutrients that are comprised in a vegetable or a fruit, said use comprising consuming an edible product containing at least 4 wt.% of said glyceride component within 30 minutes of consuming said vegetable or fruit, said glyceride component consisting of:
- 76-97 wt.% triglycerides;
- 0-8 wt.% diglycerides;
- 3-16 wt.% monoglycerides; and
wherein the weight ratio diglycerides:monoglycerides is less than 1:2.

The term "oil" as used herein refers to a lipid material that can be liquid or solid at ambient temperature. Throughout this document, unless indicated otherwise, the terms "oil" and "fat" are used interchangeably.

The term "monoglycerides" as used herein refers to 1-monoacylglycerols and 2-monoacylglycerols that contain a glycerol residue with two non-esterified hydroxyl groups.

The term "diglycerides" as used herein refers to 1,2-diacylglycerols, 2,3-diacylglycerols and 1,3-diacylglycerols that contain a glycerol residue with one non-esterified hydroxyl group.

The solid fat content at a temperature of t °C (Nₜ) equals the solid fat content at a temperature of t °C as measured by means of ISO 8292 - Animal and vegetable fats and oils - Determination of solid fat content - Pulsed nuclear magnetic resonance method.

The term "fatty acid" as used herein, unless indicated otherwise, refers to fatty acid residues contained in constituents of the glyceride component, i.e. triglycerides, diglycerides and monoglycerides.

Unless indicated otherwise, fatty acid concentrations are expressed as a percentage of the total weight of the fatty acids. Fatty acid concentrations are suitably determined by means of ISO 5509 - Animal and vegetable fats and oils - Preparation of methyl esters of fatty acids and ISO 5508 - Animal and vegetable fats and oils - Analysis by gas chromatography of methyl esters of fatty acids.

Unless indicated otherwise, the term "bioavailability" as used herein should be construed as "oral bioavailability".

The term "consuming" as used herein refers to the ingestion of a material such as the present edible product, a vegetable or a fruit.

Whenever reference is made to "weight percentage" or "wt.%", this should be construed as referring to %(w/w).

Whenever a parameter, such as a concentration, a solid fat content or a ratio, is said to be less than a certain upper limit it should be understood that in the absence of a specified lower limit the lower limit for said parameter is 0.

The term "comprising" is used herein in its ordinary meaning and means including, made up of, composed of, consisting and/or consisting essentially of. In other words, the term is defined as not being exhaustive of the steps, components, ingredients, or features to which it refers.

Except in the operating and comparative examples, or where otherwise explicitly indicated, all numbers in this description indicating amounts or ratios of material or conditions of reaction, physical properties of materials and/or use are to be understood as modified by the word "about".

The glyceride component contained in the edible product may have been incorporated therein as a single ingredient or the constituents of the glyceride component may have been separately introduced into the edible product. For instance, triglycerides and monoglycerides may have been added separately in the preparation of the edible product. Also, each of the constituents of the glyceride component may originate from two or more different sources. Thus, for instance, triglycerides contained in the glyceride component may originate from a vegetable oil and an oil-containing ingredient.

The inventors have found that the ability of the present edible product to enhance the bioavailablity of oil-soluble micronutrients in vegetables or fruit is dependent on the relative amounts of triglycerides, diglycerides and monoglycerides contained therein. Preferably, the glyceride component comprises at least 3.5 wt.%, more preferably at least 4 wt.% and most preferably at least 5 wt.% of monoglycerides. Typically, the amount of monoglycerides contained in the edible product does not exceed 12% by weight of the glyceride component.

The glyceride component may contain a small amount of diglycerides besides the main component triglycerides and monoglycerides. The diglyceride content of the glyceride component typically lies in the range of 0-6wt.%, more preferably in the range of 0-4 wt.%. Most preferably, the glyceride component contains 0-3 wt.% of diglycerides.

In accordance with a particularly preferred embodiment, monoglycerides and triglycerides are contained in the glyceride component in a weight ratio monoglyceride:triglycerides of less than 1:6, more preferably of less than 1:8. Typically, the latter weight ratio exceeds 1:30, more preferably it exceeds 1:25, and most preferably it exceeds 1:20.

Diglycerides and monoglycerides are preferably contained in the glyceride component in a weight ratio diglycerides:monoglycerides of less than 1:3, more preferably of less than 1:4, most preferably of less than 1:10.

The triglyceride content of the glyceride component preferably lies in the range of 80-97 wt.%, more preferably of 84-96 wt%.

The fatty acids contained in the glyceride component typically have a carbon chain length of 6-24. Preferably, at least 80 wt.% of the fatty acids contained in the glyceride component are C₁₆-C₂₀ fatty acids, more preferably C₁₆-C₁₈ fatty acids.

According to a particularly preferred embodiment at least 80% wt.% of the fatty acids contained in the glyceride component are unsaturated C₁₈ fatty acids, notably unsaturated C₁₈ fatty acids selected from oleic acid, linoleic acid, linolenic acid and combinations thereof.

The amount of saturated C₁₆-C₁₈ monoglycerides in the glyceride component preferably does not exceed 20%, most preferably it does not exceed 18% by weight of the monoglycerides. Expressed differently, the amount of saturated C₁₆-C₁₈ monoglycerides does not exceed 4%, more preferably does not exceed 2%, and most preferably does not exceed 1.5% by weight of the glyceride component.

In accordance with one embodiment of the use of the glyceride component in accordance with the present invention, the vegetable or fruit comprising the one or more oil soluble micronutrients is comprised within the same edible product as the glyceride component. An example of such a product is a dressing or a sauce that contains vegetable particles.

According to another, more preferred embodiment, the edible product and the vegetable or fruit are consumed separately, i.e. ingested separately, but the time period between these separate consumption events does not exceed 30 minutes. Here the time period between these consumption events is defined as the time period that starts with the end of the first event and that ends with the start of the other event.

According to a particularly preferred embodiment, the edible product is consumed within 20 minutes, most preferably within 10 minutes of consuming the vegetable or the fruit. It should be understood that in accordance with this embodiment, the edible product can be consumed prior or after consumption of the vegetable or the fruit.

According to yet another, particularly preferred embodiment, the edible product is combined with the vegetable or the fruit prior to consumption. Examples of this particular embodiment include the combination of a salad and a salad dressing, the combination of cooked vegetables and a sauce, and the combination of fruit and a dessert.

The edible product of the present invention can suitably be used to enhance the bioavailability of a wide range of oil-soluble micronutrients. Examples of such oil-soluble micronutrients include provitamin A, vitamin E, vitamin K, lutein, zeaxanthin and lycopene. Examples of provitamin A whose bioavailability can be enhanced effectively by using the present product include α-carotene, β-carotene, γ-carotene and β-cryptoxanthin.

The fruit or vegetable containing the oil soluble micronutrients can be fresh or cooked. According to a particularly preferred embodiment, the vegetable and/or fruit is fresh.

In accordance with a particularly preferred embodiment of the present use, the edible product is a salad dressing and the vegetable or fruit is a component of a salad. Advantageously, said salad dressing is combined with the salad prior to consumption. Preferably, the salad comprises at least 40 wt.%, more preferably at least 70 wt.% of one or more fresh vegetables selected from lettuce, tomato, carrot, beetroot and combinations thereof.

In accordance with the aforementioned use, the salad dressing can be combined with the salad in numerous ways. A convenient way of combining the dressing with the salad is to pour the salad dressing over a freshly prepared salad.

According to a particularly preferred embodiment, the edible product containing the glyceride component that is consumed in accordance with the present use is an edible product as defined below.

A further aspect of the invention relates to an edible product containing at least 4 wt.% of a glyceride component consisting of:
- 76-97 wt.% triglycerides;
- 0-8 wt.% diglycerides;
- 3-16 wt.% monoglycerides; and
wherein the weight ratio diglycerides:monoglycerides is less than 1:2, and wherein the edible product is packaged in a sealed container that carries one or more statements indicating that the consumption of the edible product increases bioavailability of oil soluble micronutrients that are comprised in vegetables or fruit. The glyceride component of the packaged product preferably is a glyceride component as defined herein before or below.

In accordance with a particularly preferred embodiment, the packaged edible product is a salad dressing and the one or more statements on the container indicate that the salad dressing can be used on a salad to increase the bioavailability of oil soluble micronutriens that are comprised in the vegetable or fruit components of the salad.

Another aspect of the invention relates to an edible product that comprises 4-90 wt.% of a glyceride component and 10-96 wt% of other components, said glyceride component consisting of:
- 76-97 wt.% triglycerides;
- 0-8 wt.% diglycerides;
- 3-16 wt.% monoglycerides; and
said glyceride component having a solid fat content at 10°C (N₁₀) of less than 5%, preferably of less than 3%; wherein the weight ratio diglycerides:monoglycerides is less than 1:2; and wherein the edible product contains at least 0.5 wt.% of monoglycerides.

The glyceride component contained in this edible product advantageously is a glyceride component as defined herein before.

Preferably, the edible product comprises 4-83 wt.% of the glyceride component and 17-96 wt.% of other components. Examples of other components that may contained in the edible product are water, carbohydrates, proteins, vitamins, salt, acids, flavours, colours and emulsifiers other than monoglycerides or diglycerides.

The benefits of the present invention are particularly appreciated in edible products containing low or moderate levels of glyceride component as in these products the 'boosting effect' of the monoglycerides on the bioavailability of lipophlic micronutrients is particularly valuable. Accordingly, the present product advantageously contains 5-65 wt.%, more preferably 5-45 wt.% and most preferably 5-30 wt.% of the glyceride component.

Besides the glycerides contained in the glyceride component, the edible product may contain other glycerides such as, for instance, glycerophosphoroplipids.

In accordance with another preferred embodiment, the edible product contains at least 0.7 wt.%, more preferably at least 0.9 wt.% and most preferably at least 1.2 wt.% of monoglycerides. The monoglyceride content of the edible product usually does not exceed 14 wt.%. Most preferably, the edible product contains not more than 7% of monoglycerides by weight of the edible product.

In accordance with a particularly preferred embodiment, the glyceride component contains less than 20%, more preferably les than 18 wt.% saturated C₁₆-C₁₈ monoglycerides by weight of the monoglycerides.

The edible product typically contains less than 2.0 %, more preferably less than 1.0 wt.% and most preferably less than 0.5 wt.% saturated C₁₆-C₁₈ monoglycerides.

According to a particularly preferred embodiment, the edible product comprises 4-85 wt.% of an oil phase and 15-96 wt.% of an aqueous phase, wherein the oil phase and the aqueous phase together represent at least 70 wt.%, more preferably at least 80 wt.% and most preferably at least 90 wt.% of the product. This edible product may be provided in the form of an emulsion, especially an oil-in-water emulsion or in the form a non-emulsified product wherein the oil phase is 'sitting on' the aqueous phase.

As explained herein before, the benefits of the present invention are particularly pronounced in edible products having a low or moderate oil content. Thus, it is preferred that the oil phase represents not more than 65 wt.%, even more preferably not more than 45 wt.% and most preferably not more than 30 wt.% of the edible product.

The glyceride component typically represents at least 90 wt.%, more preferably at least 95 wt.% of the oil phase comprised in the edible product.

The above described edible product preferably contains an acidified continuous aqueous phase having a pH of less than 6.0, more preferably of 1.5-5.5.

In the embodiment wherein the edible product is an oil-in-water emulsion the dispersed oil phase typically has a volume weighted average diameter of less than 40 µm, more preferably of 0.1-30 µm and most preferably of 0.5-20 µm.

Unlike the emulsions described in US 4,803,087 the oil-in-water emulsion according to the present invention preferably contains less than 1.4 wt.%, more preferably less than 1.0 wt.%, even more preferably less than 0.5 wt.% of an emulsifying agent selected from polyoxyethylene sorbitan oleates, polyoxyethylene sorbitan stearates and mixture thereof. Most preferably, the emulsion does not contain the latter emulsifying agent.

Examples of edible products encompassed by the present invention include: dressings (including salad dressings), mayonnaise, cooking oils, kitchen fats (e.g. kitchen margarine), sauces, soups, spreads and desserts (e.g. ice cream). Preferably, the edible product is selected from the group consisting of dressings, mayonnaise, sauces and desserts. Even more preferably, the edible product is a dressing or a mayonnaise. Most preferably, the edible product is a dressing, especially a salad dressing.

It is preferred that the salad dressing of the present invention can be poured over a freshly prepared salad. Hence, according to a preferred embodiment, the salad dressing is pourable at ambient temperature so it can be dispensed from a bottle or another container. In order to ensure that the dressing will cling to the salad, it is advantageous to incorporate one or more viscosifiers in the dressing. Advantageously, the dressing of the present invention has a viscosity of at least 200 mPa.s, said viscosity being determined by Brookfield rheometer, spindle RV3, 30rpm, 20°C. Even more preferably, the dressing has a viscosity of at least 350 mPa.s.

In accordance with one advantageous embodiment, the dressing of the present invention is an oil-in-water emulsion. According to an alternative embodiment, the dressing is non-emulsified and comprises a layer of aqueous phase and a layer of oil phase. The latter type of dressing is usually shaken to produce an emulsion before it is applied onto a salad.

The aqueous phase of the dressing of the present invention preferably has been acidified. Typically, the aqueous phase of the dressing has a pH in the range of 2.0-5.5, more preferably of 2.5-5.0. Food grade acids that may suitably be applied in the edible product include acetic acid, citric acid, lactic acid, sorbic acid, phosphoric acid, malic acid, benzoic acid, tartaric acid, ascorbic acid and combinations thereof. Most preferably, the acid is selected from acetic acid, citric acid and combinations thereof. According to a particularly preferred embodiment, the dressing contains at least 0.1 g/l of a food-grade acid as described herein before.

According to yet another advantageous embodiment of the present invention, the aqueous phase of the dressing contains 0.01-10 wt.%, more preferably 0.05-5wt.% of protein. Examples of proteins and protein sources that may suitably be incorporated in the aqueous phase include milk protein, egg protein, rice protein, corn protein, soy protein, mustard flour, gelatin, and combinations thereof. Preferably, the aqueous phase of the dressing contains a protein or protein source selected from milk protein, egg protein and mustard protein. The inclusion of protein not only has a favorable impact on the taste and texture of the dressing but is also believed to further boost the advantageous bioavailability enhancing effect of the dressing.

Yet another aspect of the invention relates to a salad comprising at least 50 wt.% of vegetable and/or fruit components and at least 3 wt.% of an edible product according to the present invention.

Particularly preferred is a salad that comprises at least 40 wt.%, preferably at least 70 wt.% of one or more vegetables selected from lettuce, tomato, carrot, beetroot and combinations thereof.

The present invention also provides a process of manufacturing an edible product as defined herein before, said process comprising combining 76-97 parts by weight of a triglyceride component having a triglyceride content of 95-100 wt.% with 3-16 parts by weight of a monoglyceride component having a monoglyceride content of 70-100 wt.%.

The invention is further illustrated by means of the following, non-limiting examples.

### EXAMPLES

### Example 1

The effect of the glyceride composition of the oil phase of salad dressings on the bioaccessibility of lipophilic micronutrients (β-carotene) contained in a salad was assessed in an *in vitro* bioaccessibility test. Basic low fat salad dressings were prepared in accordance with the recipe described in Table 1.

**Table 1**

| | **Wt%** |
|---|---|
| Water (ultra pure) | 77.9 |
| Acetic acid (10%) | 6.2 |
| Glyceride component | 2.0 |
| Sucrose | 11 |
| NaCl | 2.9 |

Seven dressings were prepared using the seven different glyceride components depicted in Table 2.

**Table 2**

| | **Wt.%** | |
|---|---|---|
| **Sample** | **Monoglyceride ^{#}** | **Sunflower oil** |
| 1 | 1.0 | 99.0 |
| 2 | 2.0 | 98.0 |
| 3 | 4.0 | 96.0 |
| 4 | 6.0 | 94.0 |
| 5 | 8.0 | 92.0 |
| 6 | 10.0 | 90.0 |
| 7 | 12.0 | 88.0 |

| | | |
|---|---|---|
| # Dimodan® U/J (Danisco) - Distilled monoglyceride made from sunflower oil; contains at least 90 wt.% monoglyceride, 100% fat of which 15 g saturated fat | | |

Also a control a dressing was used having a composition as described in Table 1, but wherein the glyceride component had been replaced by aqueous phase.

The effect of these different dressings on the bioaccessibility of the β-carotene contained in a salad was assessed by adding these dressings to Romaine Lettuce green leafy vegetables and by subjecting samples of these salads to an *in vitro* bioaccessibility test as described hereinafter.

Salad samples were prepared by adding 200 grams Romaine Lettuce + 200 grams of water in a blender and processing them until salad particles were obtained which were comparable to the size after normal chewing. 50 grams of this salad mixture (comprising 25 grams salad) was then put into the reaction vessel of the *in vitro* digestion model. To this 10 grams of the salad dressing was added by separately pipetting the aqueous phase and the oil phase of the dressing.

Effects on bioaccessibility were evaluated by determining the β-carotene content of the vegetable and by measuring the *in vitro* extraction of β-carotene in digestive juices. Artificial digestive juices were prepared based on human physiology and added to the products, mixed and incubated for 30 minutes at physiological pH (7.5)..The fraction of β-carotene that is released from the salad components into the aqueous volume (dissolved or solubilised in mixed micelles) of the digestive juices after centrifugation and filtration represents the bioaccessible fraction. The relative *in vitro* accessibility of β-carotene can be calculated as the *in vitro* accessible amount over the total amount of β-carotene present in the vegetable and expressed as a percentage. The results obtained are summarized in Table 3.

**Table 3**

| **Sample** | **Monoglyceride / oil** | **µg β-carotene per g salad** | **Bioaccessibility** |
|---|---|---|---|
| Control | 0/100 | 0.22 | 2.29 |
| 1 | 1/99 | 0.23 | 2.43 |
| 2 | 2/98 | 0.28 | 2.89 |
| 3 | 4/96 | 0.37 | 3.86 |
| 4 | 6/94 | 0.33 | 3.49 |
| 5 | 8/92 | 0.38 | 3.91 |
| 6 | 10/90 | 0.34 | 3.55 |
| 7 | 12/88 | 0.35 | 3.69 |

These results indicate that a dressing in which the oil phase consists of triglycerides and at least 3 wt.% of monoglycerides is substantially more effective in enhancing the bioavailability of the β-carotene contained in a salad than a salad dressing comprising an oil phase that consists of triglycerides and less than 2 wt.% of monoglycerides.

### Example 2

A recipe for a non-emulsified salad dressing that can be used to enhance the bioavailability of lipophilic micronutrients in salad components is described in Table 4.

**Table 4**

| **Ingredient** | **Wt%** |
|---|---|
| Aqueous solution of sucrose and salt | 56.813 |
| Vinegar (White) | 17.400 |
| Sunflower oil | 19.596 |
| Dimodan U/J ^{#} | 1.704 |
| Herbs & spices | 3.500 |
| Flavouring & colouring | 0.800 |
| Xanthan gum | 0.180 |
| Calcium Disodium EDTA | 0.007 |
| **Total** | **100** |

| | |
|---|---|
| ^{#} Dimodan® U/J (Danisco) - Distilled monoglyceride made from sunflower oil; contains at least 90 wt.% monoglyceride, 100% fat of which 15 g saturated fat | |

## Claims

1. An edible product comprising 4-90 wt.% of a glyceride component and 10-96 wt% of other components, said glyceride component consisting of:
• 76-97 wt.% triglycerides;
• 0-8 wt.% diglycerides;
• 3-16 wt.% monoglycerides; and
said glyceride component having a solid fat content at 10°C (N₁₀) of less than 5%; wherein the weight ratio diglycerides:monoglycerides is less than 1:2; and wherein the edible product contains at least 0.5 wt.% of monoglycerides.

2. Edible product according to claim 1, wherein the glyceride component comprises 3.5-12 wt.% of monoglycerides.

3. Edible product according to claim 1 or 2, wherein the weight ratio monoglycerides:triglycerides is less than 1:6.

4. Edible product according to any one of the preceding claims, wherein the weight ratio diglycerides:monoglycerides is less than 1:3.

5. Edible product according to any one of the preceding claims, wherein the glyceride component contains less than 20% saturated C₁₆-C₁₈ monoglycerides by weight of the monoglycerides.

6. Edible product according to any one of the preceding claims, wherein the product contains at least 0.7 wt.%, preferably at least 0.9 wt.% of monoglycerides.

7. Edible product according to any one of the preceding claims, wherein the product contains less than 1%, preferably less than 0.5 wt.% saturated C₁₆-C₁₈ monoglycerides.

8. Edible product according to any one of the preceding claims, wherein the product comprises 4-85 wt.% of an oil phase and 15-96 wt.% of an aqueous phase, wherein the oil phase and the aqueous phase together represent at least 70 wt.% of the product.

9. Edible product according to claim 8, wherein the product is an oil-in-water emulsion comprising a dispersed oil phase having a volume weighted average diameter of less than 40 µm**,** preferably of 0.5-20 µm.

10. Edible product according to claim 8 or 9, wherein the product has a pH of less than 6.0.

11. Edible product according to any one of claims 8-10, wherein the product is selected from the group consisting of dressing, mayonnaise and sauce.

12. Use of a glyceride component for increasing the bioavailability of one or more micronutrients that are comprised in a vegetable or a fruit, said use comprising consuming an edible product containing at least 4 wt.% of said glyceride component within 30 minutes of consuming said vegetable or fruit, said glyceride component consisting of:
• 76-97 wt.% triglycerides;
• 0-8 wt.% diglycerides;
• 3-16 wt.% monoglycerides; and
wherein the weight ratio diglycerides:monoglycerides is less than 1:2.

13. Use according to claim 12, wherein the edible product is an edible product according to any one of claims 1-11.

14. A salad comprising at least 50 wt.% of vegetable and/or fruit components and at least 3 wt.% of an edible product according to any one of the claims 1-11.

15. Process of manufacturing an edible product according to any one of claims 1-11, said process comprising combining 76-97 parts by weight of a triglyceride component having a triglyceride content of 95-100 wt.% with 3-16 parts by weight of a monoglyceride component having a monoglyceride content of at least 70-100 wt.%.

## Patentansprüche

1. Essbares Produkt, umfassend 4 bis 90 Gew.-% eines Glycerid-Bestandteils und 10 bis 96 Gew.-% von anderen Bestandteilen, wobei der Glycerid-Bestandteil besteht aus:
• 76 bis 97 Gew.-% Triglyceriden;
• 0 bis 8 Gew.-% Diglyceriden;
• 3 bis 16 Gew.-% Monoglyceriden,
wobei der Triglycerid-Bestandteil bei 10°C (N₁₀) einen Gehalt an festem Fett von weniger als 5 Gew.-% hat; wobei das Gewichtsverhältnis Diglyceride:Monoglyceride weniger als 1:2 beträgt; und wobei das essbare Produkt mindestens 0,5 Gew.-% Monoglyceride enthält.

2. Essbares Produkt gemäß Anspruch 1, wobei der Glyceridbestandteil 3,5 bis 12 Gew.-% Monoglyceride umfasst.

3. Essbares Produkt gemäß Anspruch 1 oder 2, wobei das Gewichtsverhältnis Monoglyceride:Triglyceride weniger als 1:6 beträgt.

4. Essbares Produkt gemäß irgendeinem der vorhergehenden Ansprüche, wobei das Gewichtsverhältnis Diglyceride:Monoglyceride weniger als 1:3 beträgt.

5. Essbares Produkt gemäß irgendeinem der vorhergehenden Ansprüche, wobei der Glyceridbestandteil weniger als 20% vom Gewicht der Monoglyceride gesättigte C₁₆-C₁₈ Monoglyceride enthält.

6. Essbares Produkt gemäß irgendeinem der vorhergehenden Ansprüche, wobei das Produkt mindestens 0,7 Gew.-%, vorzugsweise mindestens 0,9 Gew.-% Monoglyceride enthält.

7. Essbares Produkt gemäß irgendeinem der vorhergehenden Ansprüche, wobei das Produkt weniger als 1%, vorzugsweise weniger als 0,5 Gew.-% gesättigte C₁₆-C₁₈ Monoglyceride enthält.

8. Essbares Produkt gemäß irgendeinem der vorhergehenden Ansprüche, wobei das Produkt 4 bis 85 Gew.-% einer Ölphase und 15 bis 96 Gew.-% einer wässrigen Phase enthält, wobei die Ölphase und die wässrige Phase zusammen mindestens 70 Gew.-% des Produktes ausmachen.

9. Essbares Produkt gemäß Anspruch 8, wobei das Produkt eine Öl-in-Wasser-Emulsion ist, die eine dispergierte Ölphase mit einem Volumenmittel-Durchmesser von weniger als 40 µm, vorzugsweise von 0,5 bis 20 µm umfasst.

10. Essbares Produkt gemäß Anspruch 8 oder 9, wobei das Produkt einen pH-Wert von weniger als 6,0 hat.

11. Essbares Produkt gemäß irgendeinem der Ansprüche 8 bis 10, wobei das Produkt aus der Gruppe bestehend aus Salatsauce, Mayonnaise und Sauce ausgewählt ist.

12. Verwendung eines Glyceridbestandteils zum Erhöhen der Bioverfügbarkeit von einem oder mehreren Mikronährstoffen, die in einem Gemüse oder einer Frucht enthalten sind, wobei die Verwendung das Verzehren eines mindestens 4 Gew.-% des Glyceridbestandteils enthaltenden essbaren Produktes innerhalb von 30 Minuten des Verzehrens des Gemüses oder der Frucht umfasst, wobei der Glyceridbestandteil besteht aus:
• 76 bis 97 Gew.-% Triglyceriden;
• 0 bis 8 Gew.-% Diglyceriden;
• 3 bis 16 Gew.-% Monoglyceriden; und
wobei das Gewichtsverhältnis Diglyceride:Monoglyceride weniger als 1:2 beträgt.

13. Verwendung gemäß Anspruch 12, wobei das essbare Produkt ein essbares Produkt gemäß irgendeinem der Ansprüche 1 bis 11 ist.

14. Salat umfassend mindestens 50 Gew.-% Gemüse- und/oder Fruchtbestandteile und mindestens 3 Gew.-% eines essbaren Produktes gemäß irgendeinem der Ansprüche 1 bis 11.

15. Verfahren zum Herstellen eines essbaren Produktes gemäß irgendeinem der Ansprüche 1 bis 11, wobei das Verfahren das Vereinigen von 76 bis 97 Gewichtsteilen eines Triglyceridbestandteils mit einem Triglyceridgehalt von 95 bis 100 Gew.-% mit 3 bis 16 Gewichtsteilen eines Monoglyceridbestandteils mit einem Monoglyceridgehalt von mindestens 70 bis 100 Gew.-% umfasst.

## Revendications

1. Produit comestible comprenant 4-90 % en poids d'un constituant de glycéride et 10-96 % en poids d'autres constituants, ledit constituant de glycéride étant constitué de :
▪ 76-97 % en poids de triglycérides ;
▪ 0-8 % en poids de diglycérides ;
▪ 3-16 % en poids de monoglycérides ; et
ledit constituant de glycéride présentant une teneur en graisse solide à 10°C (N₁₀) inférieure à 5 % ; dans lequel le rapport massique triglycérides:monoglycérides est inférieur à 1:2 ; et
dans lequel le produit comestible contient au moins 0,5 % en poids de monoglycérides.

2. Produit comestible selon la revendication 1, dans lequel le constituant de glycéride comprend 3,5-12 % en poids de monoglycérides.

3. Produit comestible selon la revendication 1 ou 2, dans lequel le rapport massique monoglycérides:triglycérides est inférieur à 1:6.

4. Produit comestible selon l'une quelconque des revendications précédentes, dans lequel le rapport massique diglycérides:monoglycérides est inférieur à 1:3.

5. Produit comestible selon l'une quelconque des revendications précédentes, dans lequel le constituant de glycéride contient moins de 20 % de monoglycérides en C₁₆-C₁₈ saturés en poids des monoglycérides.

6. Produit comestible selon l'une quelconque des revendications précédentes, dans lequel le produit contient au moins 0,7 % en poids, de préférence au moins 0,9 % en poids de monoglycérides.

7. Produit comestible selon l'une quelconque des revendications précédentes, dans lequel le produit contient moins de 1 %, de préférence moins de 0,5 % en poids de monoglycérides en C₁₆-C₁₈ saturés.

8. Produit comestible selon l'une quelconque des revendications précédentes, dans lequel le produit comprend 4-85 % en poids d'une phase d'huile et 15-96 % en poids d'une phase aqueuse, dans lequel la phase d'huile et la phase aqueuse représentent ensemble au moins 70 % en poids du produit.

9. Produit comestible selon la revendication 8, dans lequel le produit est une émulsion huile-dans-eau comprenant une phase d'huile dispersée présentant un diamètre moyen pondéré en volume inférieur à 40 µm, de préférence de 0,5-20 m.

10. Produit comestible selon la revendication 8 ou 9, dans lequel le produit présente un pH inférieur à 6,0.

11. Produit comestible selon l'une quelconque des revendications 8-10, dans lequel le produit est choisi dans le groupe constitué d'un assaisonnement, d'une mayonnaise et d'une sauce.

12. Utilisation d'un constituant de glycéride pour augmenter la biodisponibilité d'un ou plusieurs micronutriments qui sont compris dans un légume ou un fruit, ladite utilisation comprenant la consommation d'un produit comestible contenant au moins 4 % en poids dudit constituant de glycérides en 30 minutes de consommation dudit légume ou fruit, ledit constituant de glycéride étant constitué de :
▪ 76-97 % en poids de triglycérides ;
▪ 0-8 % en poids de diglycérides ;
▪ 3-16 % en poids de monoglycérides ; et
dans laquelle le rapport massique diglycérides:monoglycérides est inférieur à 1:2.

13. Utilisation selon la revendication 12, dans laquelle le produit comestible est un produit comestible selon l'une quelconque des revendications 1-11.

14. Salade comprenant au moins 50 % en poids de constituants de légumes et/ou de fruits et au moins 3 % en poids d'un produit comestible selon l'une quelconque des revendications 1-11.

15. Procédé de fabrication d'un produit comestible selon l'une quelconque des revendications 1-11, ledit procédé comprenant la combinaison de 76-97 parties en poids d'un constituant de triglycéride ayant une teneur en triglycéride de 95-100 % en poids avec 3-16 parties en poids d'un constituant de monoglycéride ayant une teneur en monoglycéride d'au moins 70-100 % en poids.
